# EUROPEAN PATENT APPLICATION

(11) **EP 2 053 584 A1**
(43) Date of publication of application: **29.04.2009**
(21) Application number: 07767152.7
(22) Date of filing: 19.06.2007
(51) Int. Cl.: G09F 9/30, G02F 1/1345, G09F 9/00

(54) **IMAGE DISPLAY**

(30) Priority: 27.07.2006 JP 2006204637
(71) Applicant: Rohm Co., Ltd., Kyoto-shi, Kyoto 615-8585 (JP)
(72) Inventor: KASAJIMA, Yasushi, Kyoto 615-8585 (JP)
(74) Representative: McLeish, Nicholas Alistair Maxwell
(86) International application number: PCT/JP2007/062262
(87) International publication number: WO 2008/013005

(57) **Abstract**

A liquid crystal image display (1) includes a first substrate (2), a second substrate (3), anisotropic conductive material (11) for bonding the substrates (2, 3), and liquid crystal (12). The inner surface of the first substrate (2) is provided with color filters (4R, 4G, 4B), a black mask (5), common electrodes (6A, 6B) and transfer portions (7A, 7B). Segment electrodes (8), connection wirings (10A, 10B) and a monochromatic driver IC (9) are provided on the inner surface of the second substrate (3). The transfer portions (7A, 7B) at the ends of the common electrodes (6A, 6B) on the first substrate (2) are connected to the connection wirings (10A, 10B) on the second substrate (3) via the anisotropic conductive material (11). Thus, the common electrodes (6A, 6B) are connected to the monochromatic driver IC (9) without extending over the stepped portion at the periphery of the black mask (5).

## Description

### TECHNICAL FIELD

The present invention relates to an image display for displaying images utilizing e.g. liquid crystal.

### BACKGROUND ART

Conventionally, an image display may include a pair of substrates on which electrodes are arranged perpendicularly to each other and forms images by utilizing liquid crystal sandwiched between the electrodes.

Patent Document 1 discloses a simple matrix image display including a pair of first and second substrates for sealing liquid crystal, color filters formed on the first substrate, first electrodes formed on the color filters to extend perpendicularly to the color filters, second electrodes formed on the second substrate to extend perpendicularly to the first electrodes, and a monochromatic driver IC provided on the extension of the first electrodes on the first substrate.

In this image display, the ends of the first electrodes on the color filters are connected to the monochromatic driver IC on the first substrate. Further, the ends of the second electrodes on the second substrate are transferred to a connection wiring formed on the first substrate and connected to the monochromatic driver IC via the connection wiring. The "transfer" here refers to the connection of an electrode formed on a substrate to a wiring or electrode formed on the other substrate.

In this image display, color images are displayed by controlling the first electrodes and the second electrodes connected to the monochromatic driver IC. By utilizing a monochromatic driver IC which is generally inexpensive, color image display is achieved while suppressing the cost for the image display.
Patent Document 1: JP-A-2006-17919

In this image display disclosed in Patent Document 1, since the color filters and the monochromatic driver IC are arranged on the common substrate, the first electrodes need to extend over a stepped portion (having a height of e.g. about 1 to 3 µm) defined between the periphery of the color filter and the first substrate. Thus, the first electrodes often break at the stepped portion, so that the reliability of the display is deteriorated. The same problem occurs also when a black mask having a thickness equal to that of the color filters is provided at the periphery of the color filter.

As means for solving this problem, it may be considered to provide an additional layer between the first substrate and the monochromatic driver IC to eliminate the stepped portion. However, in view of the structure, a color filter and or the like cannot be formed under the driver IC, so that the layer needs to be made of a different material. Thus, the provision of such a layer requires an additional manufacturing step and material, which increases the manufacturing cost and the material cost. Thus, it is not practical to employ this means to solve the above-described problem.

### DISCLOSURE OF THE INVENTION

The present invention has been proposed to solve the above-described problems. It is, therefore, an object of the present invention to provide an image display capable of preventing breakage of the electrodes due to a stepped portion.

To achieve the above-described object, the present invention takes the following technical measures.

According to the invention defined in claim 1, there is provided an image display comprising a first substrate and a second substrate facing each other and bonded together, a color filter formed on an inner surface of the first substrate, a plurality of first electrodes formed on the color filter, a plurality of second electrodes formed on an inner surface of the second substrate to extend in a direction crossing the first electrodes, and an electrode controller for controlling the first electrodes and the second electrodes. The electrode controller is provided on the inner surface of the second substrate.

According to the invention defined in claim 2, in the image display as set forth in claim 1, the electrode controller is provided on an extension of the second electrodes, and the first electrodes extend substantially perpendicularly to the second electrodes.

According to the invention defined in claim 3, in the image display as set forth in claim 1, the first electrodes are formed on the color filter and in parallel with the color filter.

According to the invention defined in claim 4, in the image display as set forth in claim 1, the electrode controller is a monochromatic electrode controller, the first electrodes are common electrodes, and the second electrodes are segment electrodes.

According to the invention defined in claim 5, in the image display as set forth in claim 1, a reflector for reflecting light is provided between the color filter and the first substrate.

According to the invention defined in claim 6, in the image display as set forth in claim 1, the image display is a liquid crystal display.

### BRIEF DESCRIPTION OF THE DRAWINGS

Fig. 1 is a schematic sectional view showing a liquid crystal image display according to a first embodiment.
Fig. 2 is a schematic plan view showing the inner surface side of a first substrate.
Fig. 3 is a schematic plan view showing the inner surface side of a second substrate.
Fig. 4 is a sectional view showing a region including a transfer portion and an end of a connection wiring.
Fig. 5 is a schematic sectional view showing a liquid crystal image display according to a second embodiment.

### BEST MODE FOR CARRYING OUT THE INVENTION

A liquid crystal image display according to a first embodiment of the present invention will be described below with reference to the accompanying drawings.

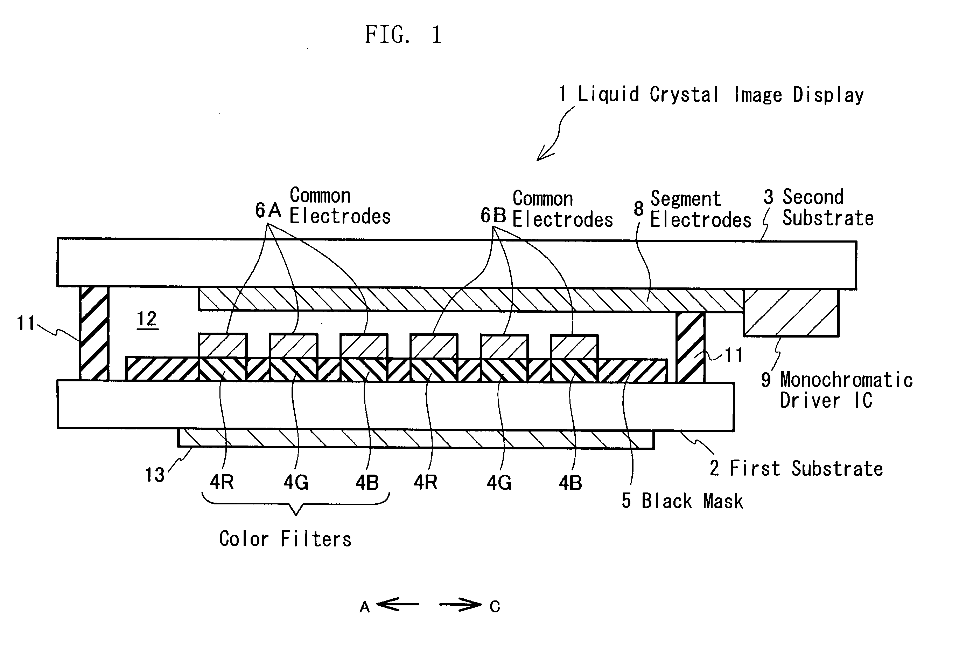

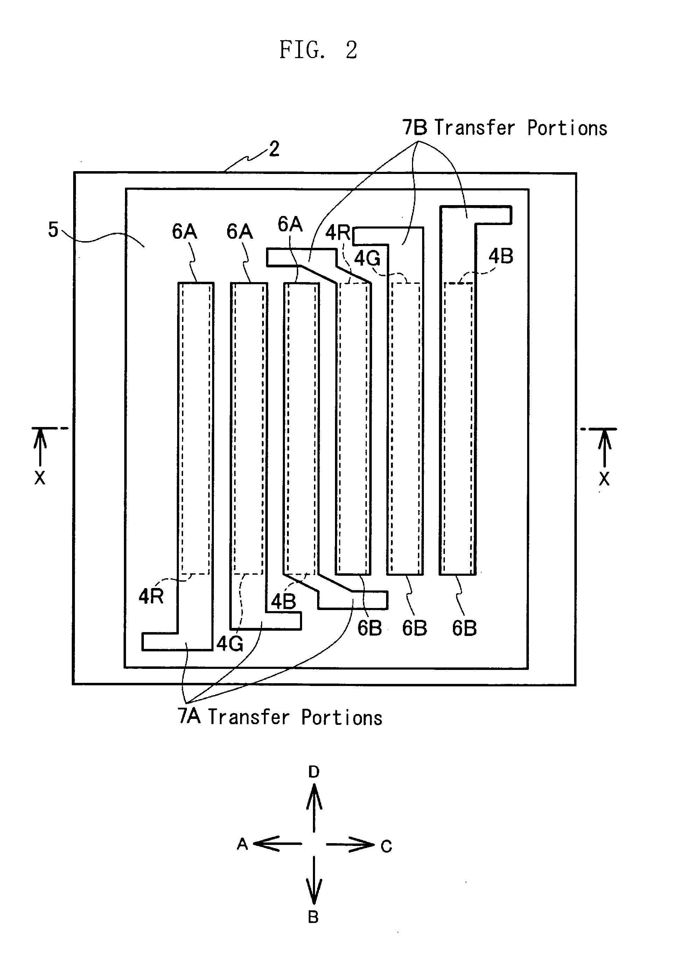

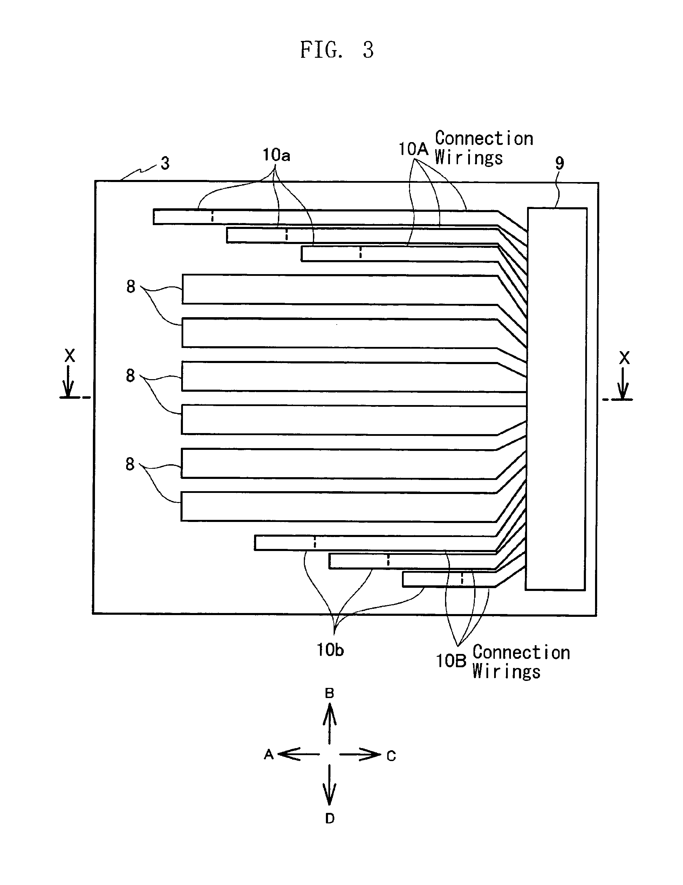

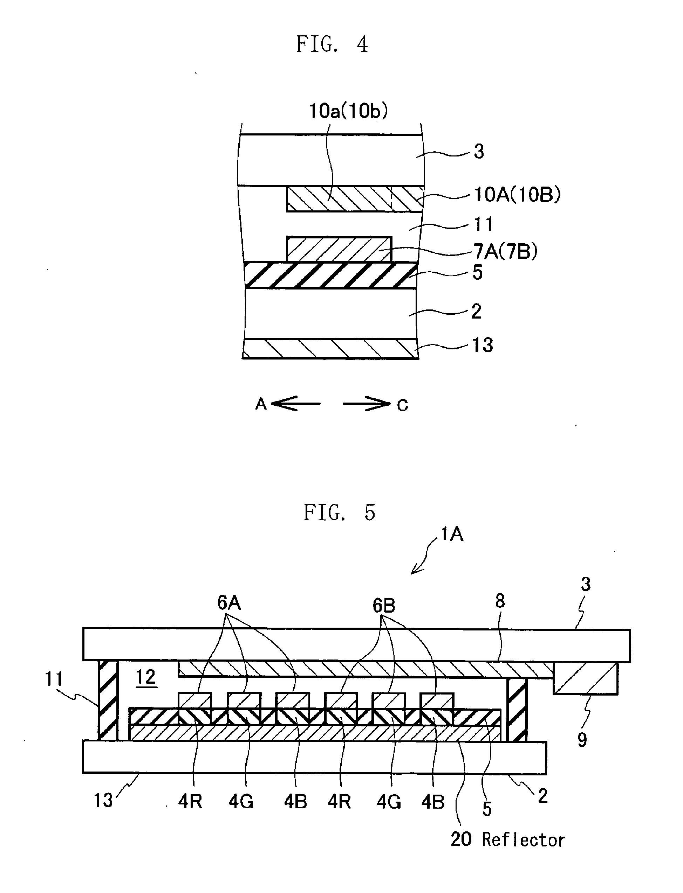

Fig. 1 is a schematic sectional view showing the liquid crystal image display according to the first embodiment. Fig. 2 is a schematic plan view showing the inner surface side of a first substrate. Fig. 3 is a schematic plan view showing the inner surface side of a second substrate. It is to be noted that Fig. 1 is a sectional view taken along lines X-X in Figs. 2 and 3. Fig. 4 is a sectional view showing a region including a transfer portion and an end of a connection wiring.

As shown in Figs. 1-3, the liquid crystal image display 1 includes a first substrate 2, a second substrate 3, a plurality of color filters 4R, 4G, 4B, a black mask 5, a plurality of common electrodes 6A, 6B (corresponding to the first electrodes as set forth in claims), transfer portions 7A, 7B, a plurality of segment electrodes 8 (corresponding to the second electrodes as set forth in claims), a monochromatic driver IC 9 (the electrode controller as set forth in claims), a plurality of connection wirings 10A, 10B, anisotropic conductive material 11, liquid crystal 12 and a backlight 13.

The first substrate 2 and the second substrate 3 are made of a light transmitting material such as glass and bonded together at the peripheries by the anisotropic conductive material 11, as shown in Fig. 1. The space surrounded by the first substrate 2, the second substrate 3 and the anisotropic conductive material 11 is filled with liquid crystal 12. The backlight 13 is provided on the outer surface of the first substrate 2.

As shown in Figs. 1 and 2, the color filters 4R, 4G, 4B, the black mask 5, the common electrodes 6A, 6B and the transfer portions 7A, 7B are provided on the first substrate 2.

The color filters 4R, 4G and 4B selectively pass the red (R) light, the green (G) light and the blue (B) light, respectively, of the white light from the backlight 13. The color filters 4R, 4G and 4B are alternately arranged in the order of R, G, and B at predetermined intervals on the inner surface of the first substrate 2.

The black mask 5 is made of a material which does not transmit light and has a thickness substantially equal to that of the color filters 4R, 4G, 4B (e.g. about 1 to 3 µm). The black mask is provided on the inner surface of the first substrate 2 to prevent light from traveling between the color filters 4R, 4G, 4B to reach the second substrate 3.

The common electrodes 6A, 6B are made of a transparent conductive material such as ITO. The common electrodes 6A, 6B have a width substantially equal to that of the color filters 4R, 4G, 4B and formed on the color filters 4R, 4G, 4B in parallel with the color filters. In Fig. 2, however, the color filters 4R, 4G, 4B are illustrated to be narrower than the common electrodes 6A, 6B for convenience. The common electrodes 6A, 6B function as scanning lines, and scanning signals are successively and periodically transmitted from the monochromatic driver IC 9 to the common electrodes.

The ends of the common electrodes 6A, 6B in the arrows B-D direction are connected to the transfer portions 7A, 7B which are connected, via the anisotropic conductive material 11, to the connection wirings 10A, 10B, which will be described later. The transfer portions 7A, 7B are formed on the black mask 5 at a region outside the color filters 4R, 4G, 4B and made of the same transparent conductive material as that of the common electrodes 6A, 6B. Specifically, the transfer portions 7A connected to the common electrodes 6A, which are the arrow A side half of the common electrodes, are provided at a region on the arrow B side of the first substrate 2. The transfer portions 7B connected to the common electrodes 6B, which are the remaining half located on the arrow C side, are provided at a region on the arrow D side of the first substrate 2. The width of each transfer portion 7A, 7B in the arrow A-C direction is substantially twice the width of each common electrode 6A, 6B in the arrow A-C direction.

As shown in Figs. 1 and 3, the segment electrodes 8, the connection wirings 10A, 10B and the monochromatic driver IC 9 are provided on the second substrate 3.

The segment electrodes 8 are made of a transparent conductive material such as ITO and formed on the inner surface of the second substrate 3 to extend perpendicularly to the common electrodes 6A, 6B. The end of each segment electrode 8 on the arrow C side is connected to the monochromatic driver IC 9.

The connection wirings 10A, 10B are made of a transparent conductive material such as ITO and extend on the second substrate 3 in parallel with the segment electrodes 8. The end of each of the connection wirings 10A, 10B on the arrow C side is connected to the monochromatic driver IC 9. The ends 10a, 10b of the connection wirings 10A, 10B in the arrow A direction are provided at locations corresponding to the transfer portions 7A, 7B on the first substrate 2. Thus, as shown in Fig. 4, the ends 10a, 10b of the connection wirings 10A, 10B are connected to the transfer portions 7A, 7B via the anisotropic conductive material 11. With this arrangement, the common electrodes 6A, 6B are connected to the monochromatic driver IC 9 via the transfer portions 7A, 7B and the connection wirings 10A, 10B.

The monochromatic driver IC 9 controls signal transmission to the common electrodes 6A, 6B and the segment electrodes 8. The monochromatic driver IC 9 is provided on the extension of the segment electrodes 8 (in the arrow C direction) and outside the anisotropic conductive material 11. Herein, if a color driver IC is used which controls each pixel as a set of three segment electrodes for R, G and B, the segment electrodes and the color filters need to be arranged in parallel with each other.

Unlike this, the monochromatic driver IC 9 controls only the positions of the pixels at which light is to be transmitted. Thus, it is not necessary to arrange the segment electrodes 8 and the color filters 4R, 4G, 4B in parallel with each other. In this embodiment, the employment of the monochromatic driver IC 9 makes it possible to arrange the common electrodes 6A, 6B and the color filters 4R, 4G, 4B in parallel with each other.

In the liquid crystal image display 1, from the driver IC 9, scanning signals are periodically transmitted to the common electrodes 6A, 6B, whereas image signals for forming an image are transmitted to selected ones of the segment electrodes 8. Thus, voltage is applied to the liquid crystal 12 at a region where the common electrode 6A, 6B to which a scanning signal is transmitted and the segment electrode 18 to which an image signal is transmitted overlap each other. The light emitted from the backlight 13 and having traveled through the color filters 4R, 4G, 4B passes only through the liquid crystal 12 in the region to which the voltage is applied, whereby an intended image is formed.

A method for manufacturing the above-described liquid crystal image display 1 will be described below.

First, as shown in Fig. 2, a first substrate 2 formed with color filters 4R, 4G, 4B, a black mask 5, common electrodes 6A, 6B and transfer portions 7A, 7B is prepared. Further, as shown in Fig. 3, a second substrate 3 formed with segment electrodes 8, connection wirings 10A, 10B and provided with a monochromatic driver IC 9 is prepared. Then, an anisotropic conductive material 11 is applied to the first substrate 2 at a region surrounding the common electrodes 6A, 6B and including the upper surfaces of the transfer portions 7A, 7B.

Then, with the transfer portions 7A, 7B positioned to correspond to the ends 10a, 10b of the connection wirings 10A, 10B, the second substrate 3 is bonded to the first substrate 2 via the anisotropic conductive material 11. As a result, the transfer portions 7A, 7B are connected to the connection wirings 10A, 10B via the anisotropic conductive material 11. Thus, the liquid crystal image display 1 is completed. To bond the first substrate 2 and the second substrate 3 together, the anisotropic conductive material 11 may be applied to the second substrate 3 instead of the first substrate.

In the liquid crystal image display 1 according to this embodiment, the monochromatic driver IC 9 is provided not on the first substrate 2 formed with the color filters 4R, 4G, 4B but on the second substrate 3. The common electrodes 6A, 6B formed on the color filters 4R, 4G, 4B are transferred to the second substrate 3 via the transfer portions 7A, 7B on the black mask 5 and connected to the monochromatic driver IC 9.

With this arrangement, the common electrodes 6A, 6B are connected to the monochromatic driver IC 9 without extending over a stepped portion defined between the periphery of the black mask 5 and the first substrate 2. As a result, the breakage of the common electrodes 6A, 6B due to the stepped portion does not occur, whereby the reliability of the liquid crystal image display 1 is enhanced.

As shown in Fig. 2, in the liquid crystal image display 1, the common electrodes 6A, 6B to be transferred are formed to extend in the arrows B-D direction, i.e., perpendicularly to the arrow C direction in which the monochromatic driver IC 9 is provided. This arrangement makes it possible to arrange the transfer portions 7A for the half 6A of the common electrodes on the arrow B side while arranging the transfer portions 7B for the other half 6B of the common electrodes on the arrow D side. This arrangement of the transfer portions 7A, 7B secures a sufficient space for extending the transfer portions 7A, 7B in the arrows A-C direction.

Unlike this embodiment, in a design in which the segment electrodes extending in the arrows A-C direction in which the monochromatic driver IC 9 is provided are to be transferred, a space for forming the transfer portions is secured only at a region on the arrow A side, because all the segment electrodes need to be extended in the one direction (arrow C direction) in which the monochromatic driver IC is provided. In this design, therefore, it is hardly possible to form transfer portions having a dimension larger than the width of the segment electrodes.

In the liquid crystal image display 1, however, by utilizing the sufficient space described above, the length of the transfer portions 7A, 7B in the arrows A-C direction is made larger (i.e., twice) than the width of the common electrodes 6A, 6B in the in the arrows A-C direction. With this arrangement, even when the positions of the first substrate 2 and the second substrate 3 are deviated from each other in the arrows A-C direction in bonding the two substrates together, contact failure between the transfer portions 7A, 7B and the ends 10a, 10b of the connection wirings 10A, 10B is prevented.

Moreover, since the liquid crystal image display 1 employs not a color driver IC but a monochromatic driver IC 9, the common electrodes 6A, 6B on the color filters 4R, 4G, 4B are arranged in parallel with the color filters 4R, 4G, 4B, as shown in Figs. 1 and 2. Herein, when a color driver IC is employed, segment electrodes on the second substrate need to be arranged in parallel with the color filters on the first substrate. In this case, when the positions of the first substrate 2 and the second substrate 3 deviate from each other (e.g. by about 10 to 15 µm), each segment electrode partially overlaps the adjacent color filter, which results in color mixing. In the liquid crystal image display 1, however, such color mixing due to the positional deviation of the substrates does not occur, so that a clear image is displayed.

The employment of a monochromatic driver IC 9 reduces the cost for the parts and power consumption during the operation.

A liquid crystal image display according to a second embodiment, which is obtained by partially varying the first embodiment, will be described below with reference to Fig. 5. Fig. 5 is a schematic sectional view showing the liquid crystal image display according to the second embodiment. In this figure, the elements which are identical or similar to those of the first embodiment are designated by the same reference signs as those used for the first embodiment, and the description thereof will be omitted.

As shown in Fig. 5, the liquid crystal image display 1A according to the second embodiment includes a reflector 20 for reflecting light. The reflector is made of e.g. aluminum and arranged between the color filters 4R, 4G, 4B or the black mask 5 and the first substrate 2.

When the reflector 20 is provided in this way, the light having entered from the second substrate 3 side is reflected by the reflector 20 to be utilized for image forming. With this arrangement, the backlight 13 provided in the first embodiment is not necessary, so that the image display is driven by relatively low power.

The structure of the liquid crystal image display 1A is the same as that of the liquid crystal image display 1 of the first embodiment except that the reflector 20 is provided and the backlight is eliminated. Thus, the liquid crystal image display of the second embodiment has the same advantages as those of the liquid crystal image display 1.

Although the present invention has been described above utilizing the embodiments, the present invention is not limited to the embodiments described in the present specification. The present invention can be varied within the spirit and scope of the invention defined by the claims. That is, the description of the present specification is merely an example and does not limit the present invention. Variations of the foregoing embodiments will be described below.

For instance, although the liquid crystal image display 1 which utilizes liquid crystal 12 has been described in the foregoing embodiments, the present invention is applicable to an image display utilizing organic EL, a plasma display, an FED (field emission display) and so on.

The number of the color filters 4R, 4G, 4B, the number of the common electrodes 6A, 6B and the number of the segment electrodes 8 may be varied appropriately.

Although the common electrodes 6A, 6B are formed directly on the color filters 4R, 4G, 4B in the foregoing embodiments, the common electrodes may be formed indirectly on the color filters 4R, 4G, 4B via an additional layer provided on the color filters.

Although the backlight 13 is provided on the first substrate 2 in the first embodiment, the backlight 13 may be provided on the second substrate 3. In this case, images are displayed on the first substrate 2 side.

Although a backlight is eliminated in the second embodiment described above, a backlight may be provided on the first substrate 2. In this case, a plurality of holes for transmitting light may be formed in a predetermined region of the reflector 20. With this arrangement, image display is possible even at a dark place.

Although transfer portions 7A, 7B are formed on the black mask 5 in the first embodiment, the transfer portions need not necessarily be formed on the black mask. For instance, the transfer portions may be formed on the color filters or on another member which has a thickness equal to that of the color filters and does not form a stepped portion with the color filters. To this transfer portions, the common electrodes are connected.

Although a monochrome driver IC 9 is employed in the foregoing embodiments, a color driver IC may be employed instead.

## Claims

1. An image display comprising:
a first substrate and a second substrate facing and bonded to each other;
a color filter formed on an inner surface of the first substrate;
a plurality of first electrodes formed on the color filter;
a plurality of second electrodes formed on an inner surface of the second substrate and extending in a direction crossing the first electrodes; and
an electrode controller provided on the inner surface of the second substrate for controlling the first electrodes and the second electrodes.

2. The image display according to claim 1, wherein the electrode controller is provided on an extension of the second electrodes; and
wherein the first electrodes extend substantially perpendicularly to the second electrodes.

3. The image display according to claim 1, wherein the first electrodes are formed on the color filter and in parallel with the color filter.

4. The image display according to claim 1, wherein: the electrode controller is a monochromatic electrode controller;
the first electrodes are common electrodes; and
the second electrodes are segment electrodes.

5. The image display according to claim 1, further comprising a light reflecting reflector provided between the color filter and the first substrate.

6. The image display according to claim 1, wherein the image display is a liquid crystal display.
